Europäisches Patentamt

European Patent Office

Office européen des brevets

(19)

(11) Numéro de publication: **0 251 960**
B1

(12)

# FASCICULE DE BREVET EUROPEEN

(45) Date de publication du fascicule du brevet:
22.08.90

(51) Int. Cl.⁵: **A47J 31/40**, G07F 13/06

(21) Numéro de dépôt: 87440037.7

(22) Date de dépôt: 18.06.87

(54) Distributeur de boissons chaudes ou froides préparées avec un extrait hydrosoluble.

(30) Priorité: 27.06.86 FR 8609500

(43) Date de publication de la demande:
07.01.88 Bulletin 88/1

(45) Mention de la délivrance du brevet:
22.08.90 Bulletin 90/34

(84) Etats contractants désignés:
AT BE CH DE ES GB GR IT LI LU NL SE

(56) Documents cités:
EP-A- 0 172 126
FR-A- 2 200 567
GB-A- 1 367 354
US-A- 2 660 340
US-A- 2 726 026
US-A- 2 852 043

(73) Titulaire: Société de Fabrication d'Appareils
Automatiques et Sirops dite : F.A.A.S. (Société à
responsabilité limitée), Zone Industrielle Les
Jonquières Ennery, F-57640 Vigy(FR)

(72) Inventeur: Ciekanski, François, 1, Allée Grégor Mendel,
F-54600 Villers-les-Nancy Meurthe et Mos(FR)

(74) Mandataire: Aubertin, François, Cabinet Lepage &
Aubertin Innovations et Prestations 4, rue de Haguenau,
F-67000 Strasbourg(FR)

## Description

L'invention concerne un distributeur de boissons chaudes et/ou froides préparées avec un extrait hydrosoluble du type conforme au préambule de la revendication 1.

On connaît déjà, par le document FR-A 2 568 119, un distributeur de boissons chaudes et/ou froides préparées avec un extrait hydrosoluble de ce type. Ce distributeur est composé essentiellement d'au moins un réceptacle d'emmagasinage de l'extrait hydrosoluble prélevé par des moyens doseurs composés d'un panneau supérieur solidaire du réceptacle d'emmagasinage, d'un plateau fixe et d'un tiroir soumis à un mouvement de va-et-vient par l'intermédiaire de moyens de commande, d'une alimentation en eau par l'intermédiaire d'un éventuel réservoir de stockage, de moyens de production d'eau chaude et/ou d'eau réfrigérée, d'un bec verseur pour introduire l'eau chaude et/ou froide dans un gobelet pourvu de la dose d'extrait hydrosoluble, d'une gobeleteuse, des moyens d'homogénéisation de la boisson et d'une niche d'accès permettant de prendre le gobelet contenant la boisson.

Les moyens doseurs comportent une table inférieure fixe dont le dessus est sur un plan horizontal légèrement au-dessus de celui du gobelet en attente et un tiroir soumis à un mouvement de va-et-vient par l'intermédiaire d'un électroaimant pour déverser directement une quantité déterminée d'extrait hydrosoluble contenu dans son orifice et prélevé d'un des réceptacles d'emmagasinage dans ledit gobelet en attente, ce dernier étant dirigé par un conduit de guidage vers le bec verseur d'eau froide ou chaude, puis vers les moyens d'homogénéisation.

Les moyens d'homogénéisation de la boisson constituée comprennent un élément moteur dont l'arbre entraîne en rotation un second arbre dont l'extrémité libre est pouvue d'une pince maintenant l'extrémité supérieure d'une palette dont l'extrémité inférieure plonge dans le gobelet et libère ladite palette après mixage, cette dernière, provenant d'un magasin de distribution individuelle, restant dans le gobelet rempli de boisson.

Cependant, il s'avère qu'en utilisant un électroaimant pour conférer au tiroir doseur contenant l'extrait hydrosoluble le mouvement de va-et-vient, il est nécessaire de disposer d'un électro-aimant relativement puissant. Il en résulte des-à-coups provoquant des chocs nuisibles au distributeur de boissons.

Par ailleurs, l'utilisation des moyens d'homogénéisation de la boisson, formés par un élément moteur, une pince saisissant une palette dans un magasin de stockage et des éléments commandant l'ouverture et/ou la fermeture de la pince au moment du prélèvement de la palette hors du magasin ou au moment de la libération de la palette dans le gobelet, s'est avérée comme relativement complexe, très coûteuse et nécessitant une place relativement importante dans le distributeur de boissons.

En outre, il s'est avéré que le déplacement du gobelet contenant l'extrait hydrosoluble depuis sa zone de chargement jusque sous le bec verseur, puis jusqu'à la niche d'accès n'est pas assuré d'une manière satisfaisante. En effet, ce déplacement s'effectue par glissement à travers le conduit de guidage. Or, il s'avère que, fréquemment, le poids du gobelet pourvu d'une dose d'extrait hydrosoluble est insuffisant pour assurer correctement ledit glissement.

Par ailleurs, on connaît par le document US-A 2 660 340 un distributeur de boissons chaudes ou froides préparées avec un extrait hydrosoluble. Ce distributeur comporte un plateau sur lequel sont fixés des réceptacles d'emmagasinage des différents extraits hydrosolubles. Ce plateau est soumis à un mouvement de rotation pour amener le réceptacle contenant l'extrait hydrosoluble choisi au-dessus d'un gobelet en attente dans une niche d'accès. Ainsi, si le consommateur choisit un café au lait sucré le plateau est soumis à une première rotation pour amener le réceptacle contenant le café hydrosoluble au-dessus dudit gobelet, puis à une seconde rotation pour amener le réceptacle contenant le lait hydrosoluble au-dessus du gobelet contenant déjà le café hydrosoluble et finalement à une troisième rotation pour l'adjonction du sucre. Il en résulte une perte de temps considérable limitant de manière importante le débit de distribution des boissons chaudes ou froides de cet appareil.

De même, on connaît par le document FR-A 2 200 567 un distributeur de boissons chaudes ou froides comportant un transporteur en forme d'étoiles à trois branches entraînées en rotation par un arbre relié à un mécanisme d'entraînement pour provoquer la rotation de 120° dudit arbre. Chaque branche comporte à son extrémité libre un anneau contenant un gobelet.

Par ailleurs, ce distributeur comporte un premier poste pourvu d'une gobeleteuse, un second poste formé par des réceptacles d'emmagasinage des différents extraits hydrosolubles et un troisième poste à l'emplacement d'un réservoir d'eau muni d'un bec verseur et servant également de niche d'accès permettant de prendre le gobelet contenant la boisson.

Au début du cycle de fonctionnement, chacun des trois anneaux du transporteur se trouve dans l'un des trois postes et l'anneau situé sous la gobeleteuse est pourvu d'un gobelet mis en attente. Après une première rotation, le gobelet est amené au second poste pour le versement dans le gobelet de l'extrait hydrosoluble choisi puis le gobelet est transféré sous le bec verseur pour l'adjonction de la quantité d'eau alors que simultanément un gobelet tombe dans l'anneau situé sous la gobeleteuse.

Toutefois, ce distributeur présente plusieurs inconvénients. Du fait que le troisième poste sert simultanément à l'adjonction de l'eau et aßu prélèvement de la boisson par l'usage, il y a risque que ce dernier retire le gobelet du distributeur avant la fin de l'écoulement de l'eau. Ainsi, il y a risque que l'eau continue à s'écouler et se répande dans le distributeur. Par ailleurs du fait que le second gobelet est mis en place dans l'anneau situé sous la gobeleteuse dès l'adjonction de l'eau dans le premier gobelet, la poussière peut se disposer dans le second gobelet. En effet, il n'est pas certain que le distributeur soit actionné une seconde fois et le second gobelet restera en attente pendant toute la durée de l'inutili- sation du distributeur. Finalement, du fait que le gobelet est mis dans un anneau, il faut le soulever pour le retirer dudit anneau. Il est donc nécessaire que le bec verseur soit situé à une certaine hauteur ce qui entraîne la création d'éclaboussures lors de l'adjonction de l'eau.

En outre, on connaît par le document GB-A 1 367 354 un distributeur de boissons qui, pour obtenir une certaine homogénéisation, utilise deux méthodes différentes. Selon un premier mode d'exécution le gobelet est soumis à un mouvement de rotation et le bec verseur est fixe. Ce dernier projette un jet d'eau sous pression soit perpendiculairement à la surface de la boisson soit obliquement par rapport à ladite surface. Selon un second mode d'exécution l'adjonction de l'eau se fait à l'aide de deux becs verseurs projetant de l'eau perpendiculairement et/ou obliquement à la surface de la boisson et montés sur un ensemble soumis à un mouvement de rotation selon un axe vertical alors que le gobelet rest fixe. Cependant, les deux becs verseurs sont alimentés par une seule et même conduite d'amenée d'eau ainsi la pression à l'entrée est la même alors que les pressions d'eau à la sortie des deux becs verseurs sont différentes puisque l'un des deux présente une buse conique. Du fait, qu'une bonne homogénéisation se fait dès le début de l'adjonction de l'eau, il est nécessaire que l'eau comporte une pression constante et déterminée ce qui n'est pas le cas puisque la pression de l'eau en provenance du bec verseur pourvu de la buse conique est différente de la pression de l'eau en provenance de l'autre bec verseur.

La présente invention telle que définie dans la revendication 1 remédie à ces inconvénients.

Les avantages obtenus grâce à cette invention consistent essentiellement en ce que:

− par rapport au document FR-A 2 568 119 on annihile les à-coups et les chocs nuisibles dus à un électro-aimant relativement important. De plus, on diminue le coût en simplifiant les moyens d'homogénéisation par suppression des palettes jetées par l'utilisateur à proximité du distributeur et, finalement, en assurant un meilleur déplacement du gobelet pourvu de l'extrait hydrosoluble en supprimant un coincement du gobelet dans le conduit de guidage

− par rapport au document US-A 2 660 340 une augmentation de la rapidité de l'exécution de l'ordre de l'utilisateur permettant par une augmentation du débit de distribution des boissons chaudes ou froides de mieux rentabiliser le distributeur

− par rapport au document FR-A 2 200 567 le distributeur présente de meilleures conditions d'hygiène du fait que le gobelet ne quitte la gobeleteuse qu'au moment de son utilisation et l'utilisateur ne peut retirer la boisson qu'après le transbordement du gobelet depuis l'adjonction de l'eau et l'homogénéisation jusqu'à la niche d'accès

− par rapport au document GB-A 1 367 354 on améliore l'homogénéisation en utilisant un jet d'eau d'un débit constant dirigé verticalement et soumis à une rotation concentrique à la paroi interne du gobelet.

Au total, ce distributeur de boissons se distingue par une diminution de son coût, une amélioration de son rendement et par une augmentation de sa fiabilité.

L'invention est exposée ci-après plus en détail à l'aide de dessins représentant seulement un mode d'exécution.

La figure 1 représente schématiquement un des moyens doseurs du distributeur de boissons.

La figure 2 représente schématiquement les moyens d'homogénéisation du distributeur de boissons.

La figure 3 représente schématiquement les moyens de préhension assurant le déplacement du gobelet depuis sa zone de chargement jusqu'à la niche d'accès.

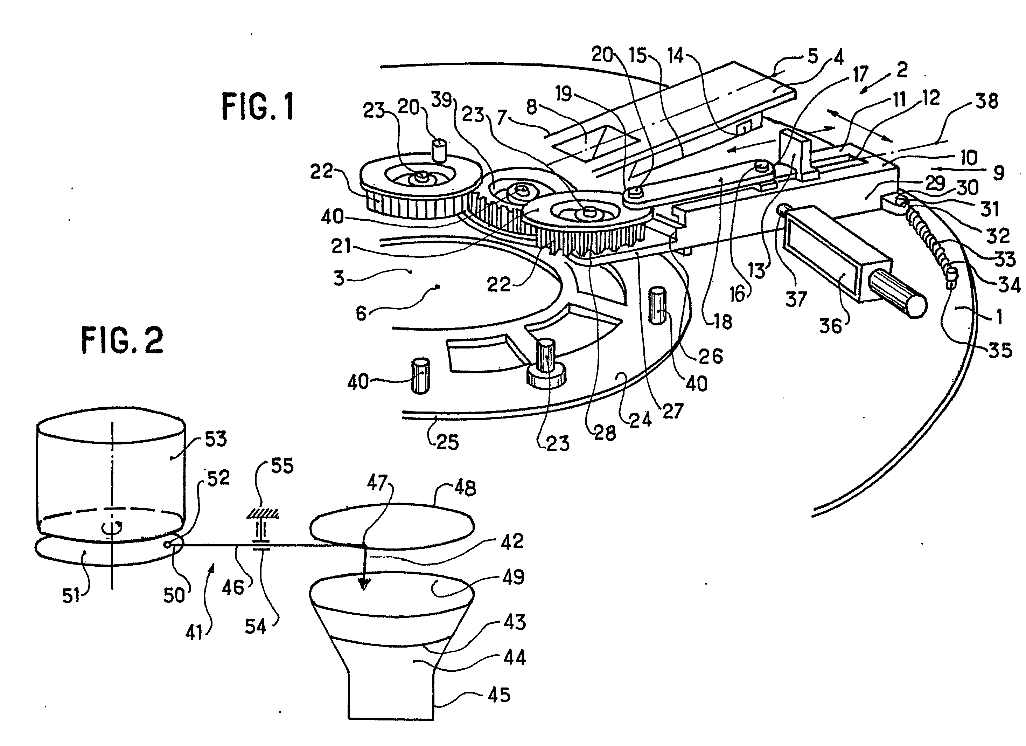

On se réfère à la figure 1.

Le distributeur de boissons chaudes et/ou froides comporte un élément supérieur et un élément inférieur séparés par un plateau 1. Celui-ci sert de support de prélèvement à des moyens 2 permettant de prélever de l'un des réceptacles (non représenté), servant de magasin à des extraits hydrosolubles pour obtenir à volonté un café, un thé, un chocolat, un bouillon ou toutes autres boissons analogues, une certaine quantité d'extrait hydrosoluble et de verser cette dernière dans un gobelet disposé dans l'alésage central 3 dudit plateau 1.

Les moyens de prélèvement 2 comportent un ensemble radial de tiroirs 4 dont les axes médians 5 convergent vers le centre 6 du plateau 1. Le nombre de tiroirs 4 est déterminé par le nombre de réceptacles lui-même déterminé en fonction du nombre de boissons de natures différentes. Ces tiroirs 4 comportent à l'une de leurs extrémités 7 un orifice 8 servant de logement à une quantité donnée d'extrait hydrosoluble. Cette quantité dépend de l'épaisseur du tiroir 4 et de la section de l'orifice 8. Le tiroir 4 est soumis, lors du fonctionnement du distributeur de boissons, à un mouvement de va-et-vient par des moyens de commande 9. Du fait que chaque tiroir 4 est actionné par un moyen de commande 9, ces derniers forment également un ensemble radial décalé angulairement par rapport à l'ensemble radial des tiroirs 4.

Chaque moyen de commande 9 comporte une glissière 10 présentant dans sa face supérieure 11 une rainure 12 dans laquelle peut se déplacer un poussoir 13 faisant saillie par rapport à la face supérieure 11 de la glissière 10. Ledit poussoir 13, en phase active, vient se loger dans un évidement 14 réalisé dans la face inférieure 15 du tiroir 4.

Ce poussoir 13 est relié par un axe d'articulation 16 à une des extrémités 17 d'une biellette 18. L'autre extrémité 19 de ladite biellette 18 est reliée par un autre axe d'articulation 20 au plateau 21 d'un pignon mené 22. Celui-ci pivote autour d'un axe vertical 23 faisant saillie par rapport au dessus 24 d'une couronne concentrique 25 solidaire du plateau 1.

La glissière 10 comporte sur son chant latéral 26, dirigé vers le pignon mené 22, une plaque 27 dans laquelle est réalisé un orifice 28 à travers lequel passe l'axe vertical 23 de sorte que la glissière 10 peut pivoter autour dudit axe vertical 23. La glissière 10 comporte sur un de ses chants longitudinaux 29 une chape 30 présentant un oeillet 31 à travers lequel on accroche une des extrémités 32 d'un élément élastique 33 dont l'autre ex trémité 34 est accrochée à un axe 35 solidaire du plateau 1.

Conformément à l'invention, les moyens de commande 9 sont soumis à un mouvement angulaire. Ce dernier est obtenu par l'action d'un vérin 36 solidaire du plateau 1 dont le piston 37 prend appui contre le chant longitudinal 29 de la glissière 10.

En phase de repos, l'axe d'articulation 16, l'axe d'articulation 20 et l'axe vertical 23 sont situés dans un même alignement se confondant avec le plan médian longitudinal 38 de la glissière 10.

Le pignon mené 22 est engréné par un pignon intermédiaire 39 pivotant autour d'un axe 40 solidaire du plateau 1. Un des pignons intermédiaires 39 est engréné par un pignon moteur solidaire en rotation de l'arbre d'un élément moteur unique (non représenté).

Le fonctionnement des moyens de prélèvement 2 est le suivant :

En phase de repos, l'ensemble des glissières 10 est décalé angulairement par rapport à l'ensemble des tiroirs 4. Après choix de la boisson , lors de la mise en action du distributeur de boissons, on sollicite un des vérins 36 de sorte que le piston 37 exerce une poussée sur la glissière correspondante 10. Celle-ci pivote autour de l'axe vertical 23 de sorte que le poussoir 13 s'engage dans l'évidement 14 du tiroir 4. Parallèlement, on distend l'élément élastique 33. Puis, le moteur unique se met en marche et entraîne à travers le train de pignons menés 22 et de pignons intermédiaires 39 l'ensemble des biellettes 18. Cependant, seul le tiroir 4 dans lequel est engagé le poussoir 13 est soumis au mouvement de va-etvient suite à l'action de la biellette 18.

Lorsque l'extrait hydrosoluble se trouve dans le gobelet et que le tiroir 4 est revenu à sa position initiale, il y a retrait du piston 37 du vérin 36 et l'élément élastique 32 exerce une traction sur la glissière 10 pour provoquer sa rotation assurant le désengagement du poussoir 13 hors de l'évidement 14 du tiroir 4.

On se réfère à la figure 2.

Conformément à l'invention, le distributeur de boissons comporte des moyens d'homogénéisation 41. Ces moyens d'homogénéisation 41 comportent au moins un bec verseur 42 projetant un jet d'eau sous pression perpendiculairement à la surface 43 de la boisson 44 en cours de formation dans le gobelet 45. L'eau sous pression est amenée à travers une conduite 46 soumise à un mouvement tel que son extrémité 47 décrit un cercle 48 concentrique à la paroi circulaire interne 49 du gobelet 45. A cet effet, l'autre extrémité 50 de la conduite 46 est reliée à un plateau tournant 51 formant manivelle à travers une articulation 52. Ce plateau tournant 51 est soumis à un mouvement de rotation et il est entraîné par un élément moteur 53. La conduite 46 est maintenue par un palier 54 solidaire du bâti 55. Ainsi, on crée un effet de tourbillonnement du liquide assurant l'homogénéité de la boisson.

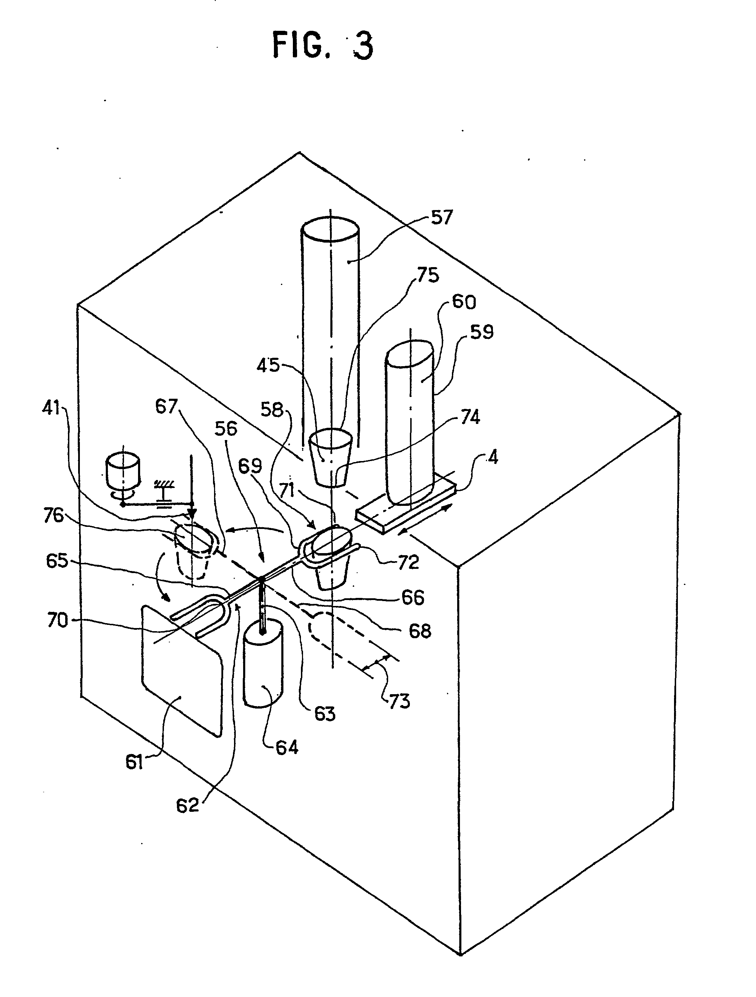

On se réfère à la figure 3.

Le distributeur de boissons comporte des moyens de préhension 56 assurant le transbordement du gobelet 45 en provenance de la gobeleteuse 57 depuis sa zone de chargement 58 , un extrait hydrosoluble prélevé par l'un des tiroirs 4 de l'un des réceptacles 59 servant de magasin aux différents extraits hydrosolubles 60 jusqu'à la niche d'accès 61 où le consommateur peut retirer la boisson désirée.

Ces moyens de préhension sont un bras 62 solidaire en rotation d'un arbre vertical 63 d'un élément moteur 64. Les deux branches 65, 66 de ce bras 62 sont d'égale longueur . Chaque extrémité 67, 68 de chaque branche 65,66 comporte une fourche 69, 70. Le gobelet 45, en provenance de la gobeleteuse 57, a une forme tronconique et vient se placer entre les dents 71, 72 de l'une des fourches 69, 70. La distance 73 séparant les dents 71, 72 est supérieure au diamètre de la petite base 74 du gobelet tronconique 45 mais inférieure au diamètre de la grande base 75 dudit gobelet tronconique 45.

Selon un autre mode de réalisation tel que visible dans la figure 2, le gobelet 45 comporte un col évasé. Ainsi, la distance 73 est supérieure au diamètre de la partie cylindrique du gobelet 45 mais inférieure au diamètre le plus grand du col évasé.

Après versement de la dose d'extrait hydrosoluble, la fourche 69, pourvue du gobelet 45, décrit une rotation angulaire pour amener le gobelet 45 jusqu'à la zone de remplissage 76 comportant les moyens d'homogénéisation 41.

Après homogénéisation, la fourche 69 décrit à nouveau une rotation angulaire pour amener le gobelet 45 en face de la niche d'accès 61.

Parallèlement , la fourche 70 se place sous la gobeleteuse 57 et un nouveau gobelet 45 se met en place en vue d'un chargement d'une nouvelle dose d'extrait hydrosoluble.

**Revendications**

1. Distributeur de boissons chaudes et/ou froides préparées avec un extrait hydrosoluble composé essentiellement d'au moins un réceptacle (59) d'emmagasinage de l'extrait hydrosoluble (6)) prélevé par des moyens doseurs (2) composés d'un panneau supérieur solidaire du réceptacle d'emmagasinage (59), d'un plateau fixe (1) et d'un tiroir (4) soumis à un mouvement de va-et-vient par l'intermédiaire de moyens de commande (9), d'une alimentation en eau par l'intermédiaire d'un éventuel réservoir de stockage, de moyens de production d'eau chaude et/ou d'eau réfrigérée, d'un bec verseur (42) pour introduire l'eau chaude et/ou froide dans un gobelet (45) pourvu de la dose d'extrait hydrosoluble (60), d'une gobeleteuse (57), des moyens d'homogénéisation (41) de la boisson et d'une niche d'accès (61) permettant de prendre le gobelet contenant la boisson, caractérisé en ce que les moyens de commande (9) sont un ensemble radial de moyens de commande (9) à rappel élastique entraîné par un élément moteur unique à travers un ensemble de moyens d'entraînement (22, 39) et dont chaque moyen de commande (9) est soumis, individuellement, en fonction du choix de la boisson, à un mouvement angulaire pour conférer au tiroir sélectionné (4) d'un ensemble radial de tiroirs (4) le mouvement de va-et-vient et des moyens de préhension (56) soumis à un mouvement de rotation transbordant successivement le gobelet (45) contenant la dose d'extrait hydrosoluble depuis sa zone de chargement (58) vers sa zone de remplissage (76) pourvue des moyens d'homogénéisation (41), formés d'au moins un bec verseur (42) projetant un jet d'eau sous pression dirigé perpendiculairement à la surface (43) de la boisson (44) et décrivant un cercle (48) concentrique à la paroi circulaire interne (49) du gobelet (45), puis vers la niche d'accès (61).

2. Distributeur de boissons selon la revendication 1, caractérisé en ce que les moyens de commande (9) comportent pour chaque tiroir (4) une glissière (10) articulée à l'une des extrémités et présentant dans sa face supérieure (11) une rainure (12) dans laquelle se déplace un poussoir (13) coopérant avec un évidement (14) réalisé dans la face inférieure (15) du tiroir (4).

3. Distributeur de boissons selon la revendication 1, caractérisé en ce que les moyens de commande (9) comportent une biellette (18) reliée à l'une de ses extrémités (17) par un axe d'articulation (16) au poussoir (13) et à l'autre extrémité (19) par un autre axe d'articulation (20) à un des éléments (22) des moyens d'entraînement.

4. Distributeur de boissons selon la revendication 1, caractérisé en ce que les moyens de commande (9) comportent pour chaque tiroir (4) un vérin (36) solidaire du plateau (1) dont le piston (37) prend appui contre le chant longitudinal (29) de la glissière (10) pour conférer à cette dernière le mouvement angulaire en vue de la coopération du poussoir (13) et du tiroir (4).

5. Distributeur de boissons selon la revendication 1, caractérisé en ce que l'ensemble des moyens d'entraînement comporte pour chaque tiroir (4) un pignon mené (22) relié à la biellette (18) et un pignon intermédiaire (39) transmettant l'entraînement en rotation à un autre pignon (22), ces différents pignons (22), 39) pivotant autour d'axes verticaux (23, 40) solidaires du plateau (1).

6. Distributeur de boissons selon la revendication 1, caractérisé en ce que l'ensemble des moyens d'entraînement comporte un pignon intermédiaire (39) engréné par un pignon moteur solidaire en rotation de l'arbre d'un élément moteur unique.

7. Distributeur de boissons selon la revendication 1, caractérisé en ce que l'axe d'articulation (16) reliant la biellette (18) au poussoir (13), l'axe d'articulation (20) reliant la biellette (18) au pignon mené (22) et l'axe vertical (23) autour duquel pivote la glissière (10) sont situés, en phase de repos du tiroir (4), dans un même alignement se confondant avec le plan médian longitudinal (38) de la glissière (10).

8. Distributeur de boissons selon la revendication 1, caractérisé en ce que les moyens pour le rappel en position de repos de la glissière (10) sont un élément élastique (33) relié, d'une part, à un axe (35) solidaire du plateau (1), et, d'autre part, à une chape (30) solidaire de la glissière (10), cet élément élastique (33) agissant lors du retrait du piston (37) du vérin (36).

9. Distributeur de boissons selon la revendication 1, caractérisé en ce que les moyens d'homogénéisation comportent une conduite (46) dont l'une des extrémités (47) décrit le cercle concentrique (48) et dont l'autre extrémité (50) est reliée par une articulation (52) à un plateau tournant formant manivelle (51) entraîné par un élément moteur (53), cette conduite (46) étant maintenue par un palier (54) solidaire du bâti (55).

10. Distributeur de boissons selon la revendication 1, caractérisé en ce que les moyens de préhension (56) sont un bras (62), solidaire en rotation d'un arbre vertical (63) d'un élément moteur (64) dont chaque branche (65, 66) comporte une fourche (69, 70) présentant des dents (71, 72) entre lesquelles vient se placer le gobelet (45).

11. Distributeur de boissons selon la revendication 10, caractérisé en ce que la distance (73) séparant les dents (71, 72) est supérieure au diamètre de la petite base (74) du gobelet tronconique (45) et inférieure au diamètre de la grande base (75) dudit gobelet tronconique (45).

12. Distributeur de boissons selon la revendication 10, caractérisé en ce que la distance (73) séparant les dents (71, 72) est supérieure au diamètre de la partie cylindrique d'un gobelet à col évasé et inférieure au diamètre le plus grand du col évasé.

**Patentansprüche**

1. Automat für warme und/oder kalte Getränke, welche mit einem wasserlöslichen Extrakt zubereitet werden, hauptsächlich bestehend aus Greifmitteln, die gebildet sind aus einem radialen Aggregat von Schubladen (4), die je eine Öffnung (8) umfassen, welche als Unterbringung für eine gegebene Menge wasserlöslichen Extrakts dient, wobei die genannten Schubladen (4) auf einer festen Platte (1) angeordnet sind, wobei die Mittelachsen der genannten Schubladen auf die Mitte der Platte zusammenlaufen, welche einer Zentralbohrung (3) umfaßt, in der ein vom Bechervorratmagazin kommender Becher angeordnet ist; einem radialen Aggregat von Vorratgefäßen (57, 59) für den wasserlöslichen Extrakt; einem radialen Aggregat von ersten Bedienungsmitteln (9) wobei jedem der genannten Gefäße eine der genannten Schubladen (4) zugeordnet ist, jeder der genannten Schubladen (4) eines der genannten ersten Bedienungsmittel (9) zugeordnet ist, wobei diese letzten geeignet sind, die dem Gefäß, das den gewählten wasserlöslichen Extrakt enthält, entsprechende Schublade einer Pendelbewegung zu unterwerfen, welche die Beförderung dieses Extrakts vom Gefäß, in dem sich die Öffnung (8) mit wasserlöslichem Extrakt füllt, bis zur genannten Zentralöffnung (3), in die der wasserlösliche Extrakt gegossen wird, erlaubt; einer Wasserzufuhr über einen eventuellen Vorratbehälter; Mitteln zur Erzeugung warmen Wassers und/oder gekühlten Wassers; einer Gießschnauze (42) zur Einführung des warmen und/oder kalten Wassers in den die Dosis wasserlöslichen Extrakts (60) enthaltenden Becher (45), welcher Automat dadurch gekennzeichnet ist, daß er ein einziges Antriebelement, sowie einen Satz von zweiten Bedienungsmitteln (22, 39), die vom genannten Antriebelement angetrieben werden, umfaßt, wobei die genannten zweiten Bedienungsmittel (22, 39) geeignet sind, jedem der genannten ersten Bedienungsmittel (9) gleichzeitig eine radiale Versetzung zu erteilen, welche die genannte Pendelbewegung der Schublade (4) erzeugen kann, wobei jedem der genannten ersten Bedienungsmittel (9) ein drittes Bedienungsmittel (33, 36) zugeordnet ist, das jedem der genannten ersten Bedienungsmittel (9) eine Winkelbewegung unterwerfen kann, zwischen einer Stellung, in der das genannte erste Bedienungsmittel (9) bezüglich der ihm zugeordneten Schublade (4) winklig verschoben ist, in welcher Stellung die genannte Schublade (4) und das genannte Bedienungsmittel (9) nicht zusammenarbeiten, und einer winkligen Stellung, in der das genannte erste Bedienungsmittel (9) mit der genannten Schublade (4) zusammenarbeitet, um der je nach dem gewählten Getränk gewählten Schublade die Pendelbewegung zu erteilen; wobei Mittel (56) zum Greifen des einer Drehbewegung unterworfenen Bechers vorgesehen sind, die geeignet sind, den die Dosis wasserlöslichen Extrakts enthaltenden Becher nacheinander von dessen Zone (76) der Füllung mit warmem und/oder gekühltem Wasser, wobei diese Wasserfüllungszone versehen ist mit Homogenisierungsmitteln (41), die gebildet ist aus einer Gießschnauze (42), die einen senkrecht zur Oberfläche (43) des Getränks (44) gerichteten, unter Druck stehenden Wasserstrahl sprüht, der einen Zirkel (48) konzentrisch zur kreisförmigen Innenwand (49) des Bechers (45) macht, danach zur Zugangsvertiefung (61) zu verstellen.

2. Automat für Getränke nach Anspruch 1, dadurch gekennzeichnet, daß die Bedienungsmittel (9), für jede Schublade (4), an einem der Enden, eine gelenkte Gleitschiene (10) umfassen, die in ihrer oberen Fläche (11) eine Nute (12) aufweist, in die sich ein mit einer in der unteren Fläche (15) der Schublade (4) vorgesehenen Aussparung (14) zusammenarbeitender Drucker (13) verstellt.

3. Automat für Getränke nach Anspruch 1, dadurch gekennzeichnet, daß die Bedienungsmittel (9) eine Stange (18) umfassen, die, an einem ihrer Enden (17) über eine Gelenkspindel (16) mit dem Drucker (13) und, am anderen Ende (19), über eine andere Gelenkspindel (20) mit einem der Elemente (2) der Antriebmittel verbunden ist.

4. Automat für Getränke nach Anspruch 1, dadurch gekennzeichnet, daß die Bedienungsmittel (9), für jede Schublade (4), einen fest mit der Platte (1) verbunden Hebebock (36) umfassen, dessen Kolben (37) an den Längsrand (29) der Gleitschiene (10) anlehnt, um dieser letzten eine Winkelbewegung, zwecks der Zusammenarbeit des Druckers (13) mit der Schublade (4), zu erteilen.

5. Automat für Getränke nach Anspruch 1, dadurch gekennzeichnet, daß das Aggregat von Antriebmitteln für jede Schublade (4) ein getriebenes Zahnrad (22), das mit der Stange (18) verbunden ist, und ein Zwischenzahnrad (39), das einem anderen Zahnrad (22) den Antrieb in Drehung weitergibt, umfaßt, wobei diese verschiedenen Zahnräder (22, 39) um fest mit der Platte (1) verbundene senkrechte Achsen (23, 40) schwenken.

6. Automat für Getränke nach Anspruch 1, dadurch gekennzeichnet, daß das Aggregat von Antriebmitteln ein Zwischenzahnrad (39) umfaßt, das mit einem in Drehung fest mit der Welle eines einzige Antriebselements verbundenen Antriebzahnrad in Eingriff kommt.

7. Automat für Getränke nach Anspruch 1, dadurch gekennzeichnet, daß die Gelenkspindel (16), welche die Stange (18) mit dem Drucker (13) verbindet, die Gelenkspindel (20), welche die Stange (18) mit dem getriebenen Zahnrad (22) verbindet und die senkrechte Spindel (23), um welche die Gleitschiene (10) schwenkt, sich, in Ruhestellung der Schublade (4), in dergleichen Ausrichtung befinden, welche der Längsmittelebene (38) der Gleitschiene (10) entspricht.

8. Automat für Getränke nach Anspruch 1, dadurch gekennzeichnet, daß die Mittel zum Rückzug der Gleitschiene (10) zur Ruhestellung ein elastisches Element (33) sind, das, einerseits, mit einer fest mit der Platte (1) verbundenen Spindel (35), und, andererseits, mit einem fest mit der Gleitschiene (10) verbundenen Überzug (30) verbunden ist, wobei dieses elastische Element (33) während dem Rückzug des Kolbens (37) des Hebebocks (36) tätig ist.

9. Automat für Getränke nach Anspruch 1, dadurch gekennzeichnet, daß die Homogenisierungsmittel eine Leitung (46) umfassen, deren eines Ende (47) den konzentrischen Zirkel (48) macht und deren anderes Ende (50) über ein Gelenk (52) mit einer eine Kurbel (51) bildenden Drehscheibe verbunden ist, die von einem Antriebelement (53) angetrieben ist, wobei diese Leitung (46) von einem fest mit dem Gestell (55) verbundenen Lagerbock (54) festgehalten ist.

10. Automat für Getränke nach Anspruch 1, dadurch gekennzeichnet, daß die Greifmittel (56) ein in Drehung fest mit einer senkrechten Welle (63) eines Antriebelements (64) verbundener Arm (62) sind, jeder dessen Schenkel (65, 66) eine Gabel (69, 70) umfaßt, die Zähnen (71, 72) aufweist, zwischen denen sich der Becher (45) setzt.

11. Automat für Getränke nach Anspruch 1, dadurch gekennzeichnet, daß der Abstand (73) zwischen den Zähnen (71, 72) größer ist als der Durchmesser der kleinen Basis (74) des kegelstumpfartigen Bechers (45) und kleiner als der Durchmesser der großen Basis (75) des genannten kegelstumpfartigen Bechers (45).

12. Automat für Getränke nach Anspruch 1, dadurch gekennzeichnet, daß der Abstand (73) zwischen den Zähnen (71, 72) größer ist als der Durchmesser des zylindrischen Teils eines Bechers mit einem erweiterten Hals und kleiner als der größte Durchmesser des erweiterten Halses.

## Claims

1. Dispenser for hot and/or cold beverages prepared with a hydrosoluble extract, mainly comprised of seizing means formed by a radial aggregate of drawers (4) each comprising an opening (8) serving as a housing for a given quantity of hydrosoluble extract, said drawers (4) being arranged on a fixed table (1), the median axes of said drawers converging towards the centre of the table which comprises a central bore (3) in which is arranged a cup proceeding from the cup supply-device; by a radial aggregate of receptacles (57, 59) for the storage of the hydrosoluble extract; by a radial aggregate of first control means (9), with each of said receptacles being associated one of said drawers (4), with each of said drawers (4) being associated one of said first control means (9), same being capable of subjecting the drawer corresponding to the receptacle containing the hydrosoluble extract selected to a reciprocating motion allowing the transportation of same from the receptacle where the opening (8) is filled with hydrosoluble extract to said central bore (3) into which the hydrosoluble extract is poured; by a water-feed through an eventual storage tank; by hot and/or cooled-water production-means; by a pouring lip (42) to introduce the hot and/or cooled water into the cup (45) containing the quantity of hydrosoluble extract (60); by a cup supply-device (57); by means (41) for homogenizing the beverage and by an access recess (61) allowing to take off the dispenser the cup (45) containing the beverage, which dispenser is characterized in that it comprises a single driving element as well as an aggregate of second control means (22, 39) driven by said driving element, said second control means (22, 39) being capable of simultaneously applying to each of said first control means (9) a radial translation capable of generating said reciprocating motion of the drawer (4), with each of said first control means (9) being associated a third control means (33, 36) capable of subjecting each of said first control means (9) to an angular motion between a position in which said first control means (9) is angularly offset with respect to the drawer (4) associated with same, position in which said drawer (4) and said control means (9) do not co-operate and an angular position in which said first control means (9) comes to co-operate with said drawer (4) in order to confer to the drawer selected according to the beverage selected the reciprocating motion, means (56) for seizing the cup subjected to a rotary motion being capable of transferring the cup containing the quantity of hydrosoluble extract successively from its area (58) of loading of the hydrosoluble extract (60) to its area (76) of filling with hot and/or cooled water, said water-filling area being provided with homogenizing means (41) formed by a pouring lip (42) projecting a jet of water under pressure oriented perpendicularly to the surface (43) of the beverage (44) and describing a circle (48) concentric to the circular inner wall (49) of the cup (45), then towards the access recess (61).

2. Dispenser for beverages according to the claim 1, characterized in that the control means (9) comprise, for each drawer (4), a hinged slide (10) at one of the ends and having in its upper face (11) a groove (12) in which moves a pusher (13) co-operating with a recess (14) provided in the lower face (15) of the drawer (4).

3. Dispenser for beverages according to the claim 1, characterized in that the control means (9) comprise a rod (18) connected, at one of its ends (17), by means of an articulation spindle (16) to the pusher (13) and, at the other end (19), by means of another articulation spindle (20) to one of the elements (22) of the driving means.

4. Dispenser for beverages according to the claim 1, characterized in that the control means (9) comprise, for each drawer (4), a jack (36) integral with the table (1) the piston (37) of which rests against the longitudinal edge (29) of the slide (10) to confer to same the angular motion with a view to the co-operation of the pusher (13) and the drawer (4).

5. Dispenser for beverages according to the claim 1, characterized in that the aggregate driving means comprise, for each drawer (4), a driven pinion (22) connected to the rod (18) and an intermediate pinion (39) transmitting the driving in rotation, to another pinion (22), these various pinions (22, 39) pivoting about vertical spindles (23, 40) integral with the table (1).

6. Dispenser for beverages according to the claim 1, characterized in that the aggregate driving means comprise an intermediate pinion (39) geared by a driving pinion integral in rotation with the shaft of the single driving element.

7. Dispenser for beverages according to the claim 1, characterized in that the articulation spindle (16) connecting the rod (18) to the pusher (13), the articulation spindle (20) connecting the rod (18) to the driven pinion (22) and the vertical spindle (23) about which pivotes the slide (10) are located, at rest of the drawer (4), in the same alignment coinciding with the longitudinal median plane (38) of the slide (10).

8. Dispenser for beverages according to the claim 1, characterized in that the means for the drawing back into the rest position of the slide (10) are a flexible element (33) connected, on the one hand, to a spindle (35) integral with the table (1), and, on the other hand, to a cover (30) integral with the slide (10), this flexible element (33) acting during the retraction of the piston (37) of the jack (36).

9. Dispenser for beverages according to the claim 1, characterized in that the homogenization means comprise a conduit (46) one end (47) of which describes a concentric circle (48) and the other end (50) of which is connected by a joint (52) to a rotary table forming a crank (51) driven by a driving element (53), this conduit (46) being retained by a bearing (54) integral with the frame (55).

10. Dispenser for beverages according to the claim 1, characterized in that the seizing means (56) are an arm (62), integral in rotation with a vertical shaft (63) of a driving element (64), each leg (65, 66) of which comprises a fork (69, 70) having teeth (71, 72) between which comes to be placed the cup (45).

11. Dispenser for beverages according to the claim 1, characterized in that the distance (73) separating the teeth (71, 72) is larger than the diameter of the small base (74) of the truncated cup (45) and smaller than the diameter of the large base (75) of said truncated cup (45).

12. Dispenser for beverages according to the claim 1, characterized in that the distance (73) separating the teeth (71, 72) is la rger than the diameter of the cylindrical part of a cup with a widened neck and smaller than the largest diameter of the widened neck.

FIG. 1

FIG. 2

# FIG. 3